(19) Europäisches Patentamt
European Patent Office
Office européen des brevets

(11) **EP 4 411 368 A1**

(12) **EUROPEAN PATENT APPLICATION**

(43) Date of publication:
**07.08.2024 Bulletin 2024/32**

(21) Application number: **24154438.6**

(22) Date of filing: **29.01.2024**

(51) International Patent Classification (IPC):
**G01N 30/60** (2006.01)

(52) Cooperative Patent Classification (CPC):
**G01N 30/6047; G01N 30/6004**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023013588**

(71) Applicant: **ARKRAY, Inc.**
**Kyoto-shi, Kyoto 601-8045 (JP)**

(72) Inventor: **MINAMI, Takao**
**Kyoto, 602-0008 (JP)**

(74) Representative: **Dehns**
**St. Bride's House**
**10 Salisbury Square**
**London EC4Y 8JD (GB)**

(54) **FLOW PATH MEMBER JOINING STRUCTURE AND COLUMN ATTACHING/DETACHING UNIT**

(57) In a flow path member joining structure for enabling a liquid to flow by attaching, to a first member (10) having a first flow path (22), a second member (50) having a second flow path (62) and aligning the first flow path (22) and the second flow path (62) with each other, the first flow path (22) is open toward a first end face (25) of the first member (10), and an enlarged diameter portion (23) whose inner diameter gradually increases toward the first end face (25) is formed at an end of the first flow path (22), and the second flow path (62) is open toward a second end face (60) of the second member (50).

FIG.8

## Description

### BACKGROUND

#### Technical Field

The present invention relates to a flow path member joining structure, and more particularly to a flow path member joining structure and a column attaching/detaching unit thereof when a column is connected.

#### Related Art

In a piping structure of a high-speed liquid chromatography apparatus, a column used for chromatography is generally attached by a screw type joint. Since a dedicated tool is normally required for this attachment, attaching/detaching the column is complicated.

In order to simplify the complicated attaching/detaching process, a tool dedicated to the attaching/detaching process is presented in technology described in Japanese Patent Application Laid-Open (JP-A) No. H4-194749. However, this tool has a large number of parts, leading to an increase in cost. JP-A No. H4-194749 discloses, as a liquid chromatography apparatus in which a column can be easily replaced, a liquid chromatography apparatus in which a column of the liquid chromatography apparatus is divided into a connector and a chromatographic tube, a filter and a sealing material are fixed to both ends of the chromatographic tube, and in order to improve a withstanding pressure of a coupling portion between the connector and the chromatographic tube, a pressing mechanism portion that presses the connector in parallel with an axis of the chromatographic tube is provided, and a large pressing force is applied by combining the pressing mechanism and a lever mechanism of an arm. With this configuration, it is possible to improve the withstanding pressure of the coupling portion between the connector and the chromatographic tube by the action of the lever mechanism of the arm.

### SUMMARY

Embodiments of the present invention provide a flow path member joining structure in which a member represented by a column can be easily attached to and detached from a member represented by a column attaching/detaching unit with a simple structure without using a large number of components with a complicated structure, and a column attaching/detaching unit in the joining structure.

One aspect of the present invention is a flow path member joining structure for enabling a liquid to flow by attaching, to a first member having a first flow path, a second member having a second flow path and aligning the first flow path and the second flow path with each other, in which the first flow path is open toward a first end face of the first member, and an enlarged diameter portion whose inner diameter increases toward the first end face is formed at an end of the first flow path, and the second flow path is open toward a second end face of the second member.

Another aspect of the present invention is a column attaching/detaching unit for attaching a column having two end faces, liquid passage holes open at centers of the two end faces, and a column flow path connecting the two liquid passage holes. The column attaching/detaching unit includes: a pair of pedestals facing the two end faces, respectively; communication holes open to respective placement portions of the pair of pedestals; liquid passage flow paths communicating with the respective communication holes; an enlarged diameter portion formed at an end of each of the liquid passage flow paths and having an inner diameter increasing toward a respective placement portion; and a clamping mechanism causing the pair of pedestals to approach the two end faces to join the liquid passage flow paths and the column flow path.

According to an embodiment of the present invention, there are provided a flow path member joining structure in which a member represented by a column can be easily attached to and detached from a member represented by a column attaching/detaching unit with a simple structure without using a large number of components with a complicated structure, and a column attaching/detaching unit in the joining structure. Further, with the flow path member joining structure of embodiments of the present invention, it is possible to easily realize a state in which the first flow path and the second flow path are joined in close contact with each other without interposing a separate member such as a sealing material.

### BRIEF DESCRIPTION OF THE DRAWINGS

Exemplary embodiments will be described in detail based on the following figures, wherein:

Fig. 1 is a perspective view illustrating an external configuration of a column attaching/detaching unit;
Fig. 2 is a perspective view illustrating an external configuration of a first pedestal;
Fig. 3 is a perspective view illustrating an external configuration of a second pedestal;
Fig. 4 is a cross-sectional view taken along the line IV-IV of Fig. 3, illustrating an internal configuration of the second pedestal;
Fig. 5 is a cross-sectional view illustrating a configuration of a column;
Fig. 6 is a perspective view illustrating a state in which the column is placed on the column attaching/detaching unit;
Fig. 7 is a perspective view illustrating a state in which the column is attached to the column attaching/detaching unit;
Fig. 8 is a cross-sectional view taken along the line X-X of Fig. 7, illustrating a state in which the column is attached to the column attaching/detaching unit;

Fig. 9 is an enlarged cross-sectional view illustrating a joining portion between the column attaching/detaching unit and the column;

Fig. 10 is a cross-sectional view schematically illustrating a joining state of an enlarged diameter portion and an inclined surface;

Fig. 11 is a schematic diagram illustrating a schematic configuration of a liquid chromatography apparatus;

Fig. 12 is a chromatogram illustrating an influence of a taper angle of the enlarged diameter portion on a measurement result; and

Fig. 13 is a graph illustrating an influence of an angle of an inclined surface of the column on a relation between a clamping force of the column and a pressure drop.

DETAILED DESCRIPTION

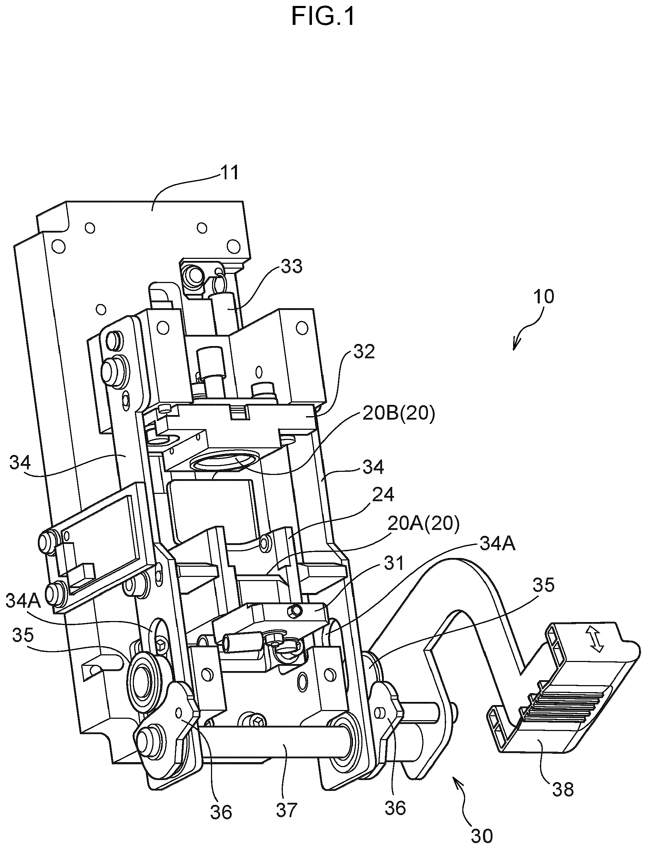

Hereinafter, embodiments of the present invention will be described with reference to the drawings. Common reference numerals in the respective drawings denote the same portions unless otherwise specified. In addition, each member and each part illustrated in each drawing are merely schematically illustrated, and a size and a positional relation of an actual product are not necessarily accurately illustrated. Note that, in the following description, as illustrated in Fig. 1, a side where an upstream block 31 is located is referred to as a lower side, and a side where a downstream block 32 is located is referred to as an upper side. That is, the description will be given assuming that a vertical direction in the drawing is a vertical direction of an apparatus and a horizontal direction of a plane of paper is a horizontal direction of the apparatus, but this does not limit the embodiment.

Fig. 1 is a perspective view illustrating an external configuration of a column attaching/detaching unit 10 (corresponding to a first member) of the present embodiment. The column attaching/detaching unit 10 includes a substantially plate-like support 11, a first pedestal 20A fixedly attached to the support 11 via an upstream block 31 to be described later, a second pedestal 20B attached so as to be vertically movable along the support 11 via a spring 33 to be described later and a downstream block 32 to be described later, and a clamping mechanism 30.

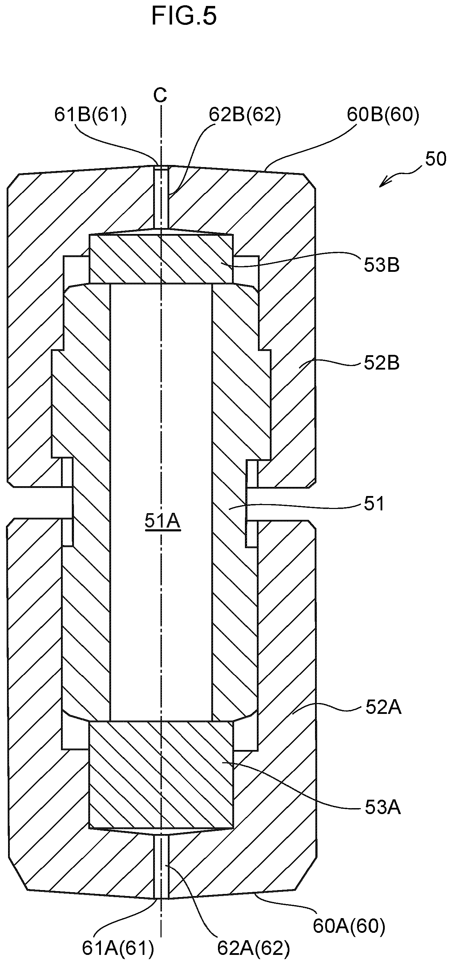

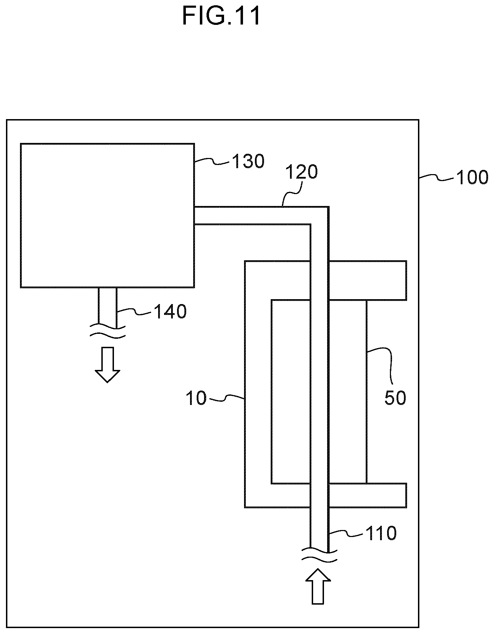

The first pedestal 20A for supporting a column 50 (see Fig. 5) to be described later is provided in the upstream block 31. The second pedestal 20B for holding the column 50 is provided in the downstream block 32. The first pedestal 20A and the second pedestal 20B face each other in the vertical direction. In a liquid chromatography apparatus 100 (see Fig. 11) described later, the apparatus 100 is designed for a liquid to flow from the lower side to the upper side. Therefore, in the column attaching/detaching unit 10, the upstream block 31 and the first pedestal 20A held by the upstream block are located on the lower side which is the upstream side of a liquid flow path, and the downstream block 32 and the second pedestal 20B held by the downstream block are located on the upper side which is the downstream side of the liquid flow path.

As illustrated in Fig. 1, a relative distance between the first pedestal 20A and the second pedestal 20B in the vertical direction can be changed by the clamping mechanism 30. In the present embodiment, the clamping mechanism 30 includes the upstream block 31, the downstream block 32, the spring 33, a link plate 34, a roller 35, a cam 36, a camshaft 37, and a lever 38. The upstream block 31 is fixedly installed on the support 11, and the downstream block 32 is installed so as to be vertically movable along the support 11. The upstream block 31 and the downstream block 32 are connected by a pair of link plates 34 installed at both left and right ends. The link plate 34 is formed in a substantially long plate shape and extends in the vertical direction. The upper ends of the pair of link plates 34 are fixed to both left and right ends of the downstream block 32 with screws, and the pair of link plates 34 hangs from both left and right ends of the downstream block 32. The pair of link plates 34 is vertically movable along the support 11 together with the downstream block 32. On the other hand, each of the pair of link plates 34 is provided with a long hole 34A having an elongated shape extending in the vertical direction of the link plate 34 on the lower end side. A pair of rollers 35 penetrates the respective long holes 34A. The pair of rollers 35 is fixed relative to the support 11, but is rotatable. The pair of rollers 35 penetrates the long holes 34A in a state of protruding in the horizontal direction from both left and right ends of the upstream block 31 fixed to the support 11. The link plate 34 is fixed to the downstream block 32 on the downstream side, and the roller 35 penetrates the link plate on the upstream side. As a result, the link plate 34 can move vertically along the roller 35, and can move vertically together with the downstream block 32. Therefore, the downstream block 32 can be moved vertically by moving the link plate 34 vertically.

On the further lower end side of the link plate 34 from the long hole 34A, the camshaft 37 penetrates the pair of link plates 34 from the horizontal direction. The cams 36, which are plate cams, are attached to both ends of the camshaft 37 outside the link plates 34. That is, the camshaft 37 is rotatably laid from the lower end of one link plate 34 to the lower end of the other link plate 34. The cam 36 rotates integrally with the rotation of the camshaft 37. The outer peripheries of the pair of cams 36 installed outside the pair of link plates 34 correspond to the pair of rollers 35. Further, the lever 38 is attached to one end (right side in Fig. 1) of the camshaft 37. With the operation of the lever 38, the camshaft 37 rotates, and the cam 36 rotates in conjunction with the rotation of the camshaft 37. As the cam 36 abutting on the roller 35 rotates, the cam 36 slides on the roller 35, so that the camshaft 37 moves vertically so as to approach or move away from the roller 35 according to a cam profile of the cam 36.

Here, since the camshaft 37 is installed at the lower end of the link plate 34, the downstream block 32 can be moved vertically via the link plate 34 by the camshaft 37 moving vertically. Then, the design of the cam profile of the cam 36 can control the stroke in which the downstream block 32 moves vertically. By moving the downstream block 32 vertically in this manner, the relative distance between the upstream block 31 and the downstream block 32 changes. Further, since the roller 35 is rotatable, the rotation of the cam 36 can be smoothly performed. In addition, since the roller 35 is provided to penetrate the long hole 34A, it is possible to prevent a directional deviation of the vertical movement of the link plate 34 and to secure the compactness of the structure.

The spring 33 is connected to the downstream block 32 in a state of being constantly pulled, and biases the downstream block 32 upward. A holding force by the link plate 34 and a pulling force by the spring 33 are constantly applied to the downstream block 32.

Note that, in the present embodiment, the first pedestal 20A and the upstream block 31 are individually formed, but may be integrally formed. The same applies to the second pedestal 20B and the downstream block 32. When each of the first pedestal 20A and the upstream block 31, and the second pedestal 20B and the downstream block 32 is integrally formed, the upstream block 31 is combined with the first pedestal 20A, and the downstream block 32 is combined with the second pedestal 20B. As a result, since the link plate 34 in the clamping mechanism 30 only needs to be directly connected to the first pedestal 20A and the second pedestal 20B, it is not necessary to install the upstream block 31 and the downstream block 32 as a single body.

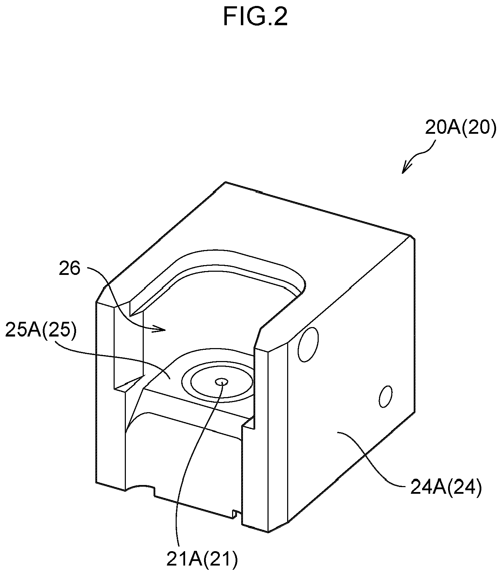

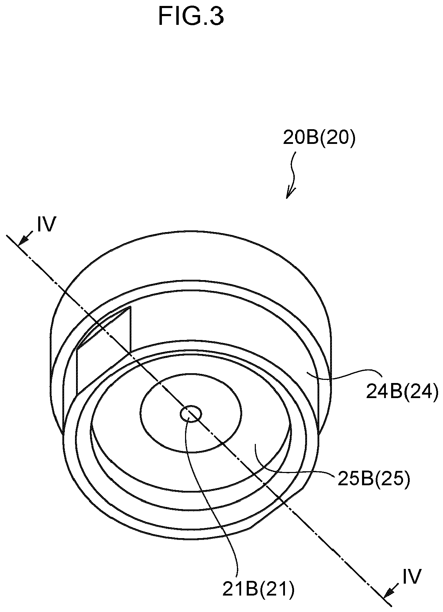

Fig. 2 is a perspective view illustrating a configuration of the first pedestal 20A, and Fig. 3 is a perspective view illustrating a configuration of the second pedestal 20B. Each of the first pedestal 20A and the second pedestal 20B has a placement portion 25 (a first placement portion 25A and a second placement portion 25B) formed as a flat surface, and a peripheral wall 24 (a first peripheral wall 24A and a second peripheral wall 24B) erected around the placement portion 25. A first communication hole 21A and a second communication hole 21B as communication holes are open at centers of the first placement portion 25A and the second placement portion 25B, respectively. In the present embodiment, since the column 50 is first placed on the first placement portion 25A of the first pedestal 20A, the first peripheral wall 24A of the first pedestal 20A is provided with an opening 26 as an inlet of the column 50. Note that the opening 26 is not necessarily provided. That is, the first peripheral wall 24A can hold an outer peripheral surface of the column 50 while allowing the column 50 to be freely taken in and out. The placement portion 25 corresponds to a first end face.

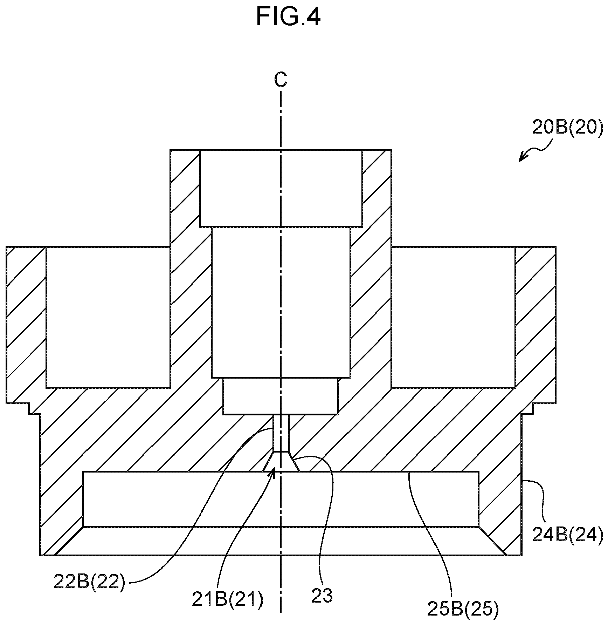

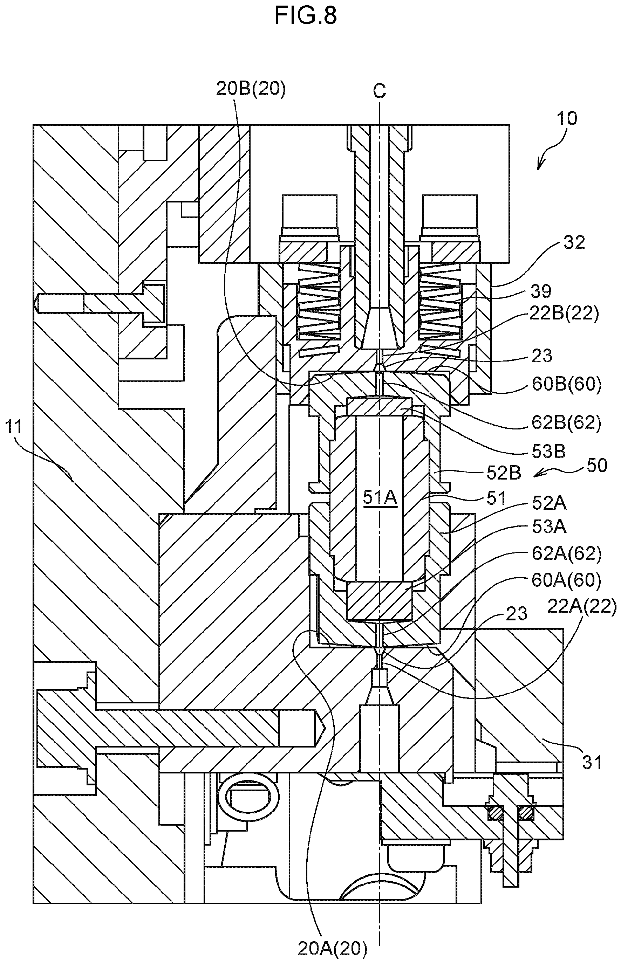

Fig. 4 is a cross-sectional view illustrating an internal configuration of the second pedestal 20B and illustrating a structure related to a flow path inside the pedestal 20. A second liquid passage flow path 22B on the downstream side penetrates the second pedestal 20B. In the vicinity of a lower end of the second liquid passage flow path 22B (that is, a portion where the second liquid passage flow path 22B is close to the second placement portion 25B of the second pedestal 20B), an enlarged diameter portion 23 is formed such that an inner diameter of the second liquid passage flow path 22B gradually increases and an inner surface of the flow path gradually expands toward the second placement portion 25B of the second pedestal 20B. In the cross-sectional view passing through the center axis C of the second liquid passage flow path 22B, the enlarged diameter portion 23 is formed in a tapered shape. An end edge of the enlarged diameter portion 23 is open toward the second placement portion 25B as the second communication hole 21B. The enlarged diameter portion 23 has the same center axis C as the second liquid passage flow path 22B and the second communication hole 21B. As will be described later, a first liquid passage flow path 22A on the upstream side also penetrates the first pedestal 20A. In the vicinity of an upper end of the first liquid passage flow path 22A (that is, a portion where the first liquid passage flow path 22A is close to the first placement portion 25A of the first pedestal 20A), the enlarged diameter portion 23 is formed such that an inner diameter of the first liquid passage flow path 22A gradually increases and an inner surface of the flow path gradually expands toward the first placement portion 25A of the first pedestal 20A. In the cross-sectional view passing through the center axis of the first liquid passage flow path 22A, the enlarged diameter portion 23 is formed in a tapered shape. An end edge of the enlarged diameter portion 23 is open toward the first placement portion 25A as the first communication hole 21A (see Fig. 8). Each of the upper end of the first liquid passage flow path 22A and the lower end of the second liquid passage flow path 22B is connected to an external flow path (not illustrated) of the column attaching/detaching unit 10. The first liquid passage flow path 22A and the second liquid passage flow path 22B are a first flow path in the column attaching/detaching unit, and are a liquid passage flow path 22 for causing the column 50 to communicate with the external flow path.

Fig. 5 is a cross-sectional view illustrating a configuration of the column 50 (corresponding to a second member). The column 50 includes a substantially cylindrical column main body 51 having a main body flow path 51A as a hollow internal space, and a substantially cylindrical first cap 52A and a substantially cylindrical second cap 52B attached to both ends of the column main body 51 via a first filter 53A and a second filter 53B, respectively. Each of the first cap 52A and the second cap 52B has a substantially cylindrical shape with one end closed at a position other than a liquid passage hole 61 described later and the other end open. Each of the end faces of the first cap 52A and the second cap 52B is formed as an inclined surface 60 (corresponding to a second end face) inclined from the center to the outer peripheral surface of the column 50 toward the periphery. The inclined surface 60 of the first cap 52A is a first inclined surface 60A, and the inclined surface 60 of the second cap 52B is a second inclined surface 60B. The first inclined surface 60A and the second inclined surface 60B are formed as both end faces of the cylindrical column 50. The outer peripheral surfaces of the first cap 52A and the second cap 52B correspond to the outer peripheral surface of the column 50. Both the first inclined surface 60A and the second inclined surface 60B are formed in a tapered shape with a gentle angle.

Then, the column 50 has a substantially hollow cylindrical shape having both end faces and an outer peripheral surface, but has a shape in which both ends are slightly pointed along an extension line of the center axis C of the column 50. A first column flow path 62A and a second column flow path 62B penetrate the first cap 52A and the second cap 52B along the center axis C, respectively. The first column flow path 62A and the second column flow path 62B form a column flow path 62 (corresponding to a second flow path) together with the main body flow path 51A. The first column flow path 62A and the second column flow path 62B respectively open the first liquid passage hole 61A and the second liquid passage hole 61B at the centers of the first inclined surface 60A and the second inclined surface 60B, that is, at the uppermost points of both ends of the column 50. The first liquid passage hole 61A and the second liquid passage hole 61B are open at the tips of the first inclined surface 60A and the second inclined surface 60B, respectively. The first liquid passage hole 61A is referred to as a liquid passage hole 61 together with the second liquid passage hole 61B. The main body flow path 51A is filled with a filler used for separation analysis of a test substance in the liquid chromatography apparatus 100.

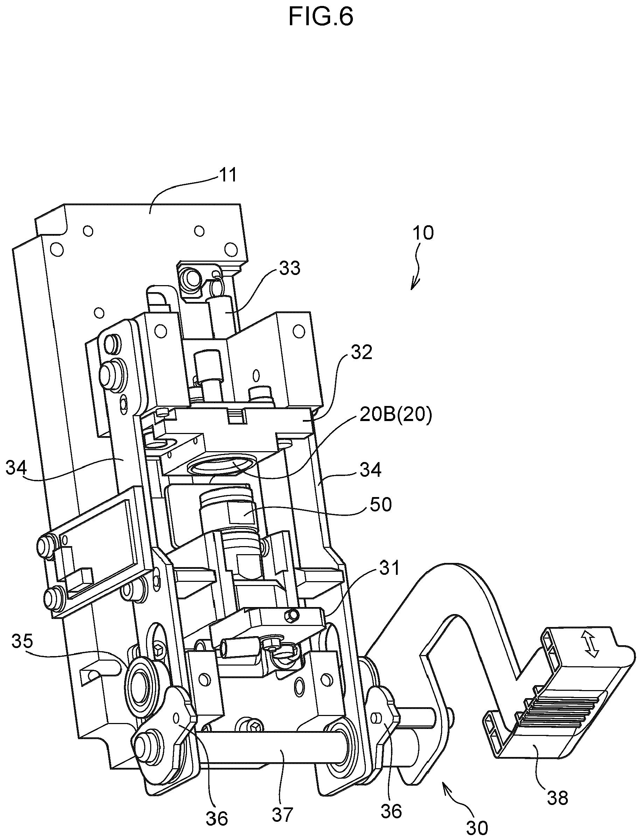

Fig. 6 is a perspective view illustrating a state in which the column 50 is placed on the column attaching/detaching unit 10. In the present embodiment, the column 50 is placed on the first pedestal 20A from the front side from the opening 26 of the first peripheral wall 24A in the first pedestal 20A. Note that, when the opening 26 is not provided, the column 50 can be placed on the first pedestal 20A from above. When the column 50 is placed on the first pedestal 20A, the first inclined surface 60A and the second inclined surface 60B are placed on the column attaching/detaching unit 10 so as to face the first placement portion 25A of the first pedestal 20A and the second placement portion 25B of the second pedestal 20B, respectively. In this state, the first inclined surface 60A is in contact with the first placement portion 25A, the outer peripheral surface of the column 50 is in contact with the first peripheral wall 24A, and the second inclined surface 60B is separated from the second pedestal 20B. When the lever 38 is raised upward from this state illustrated in Fig. 6, the camshaft 37 rotates in conjunction with the rotation of the lever 38, and the cam 36 also rotates so as to rise upward in conjunction therewith.

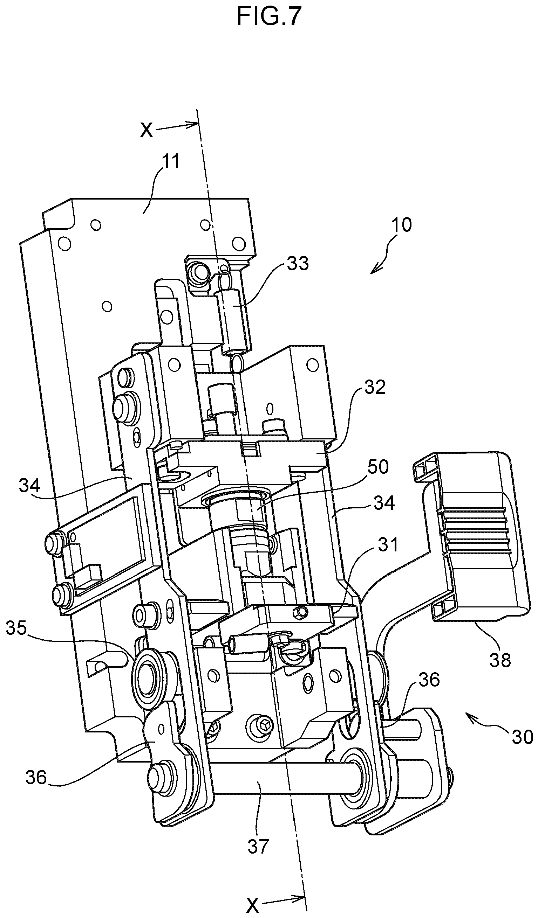

The cam 36 slides along the circumference of the roller 35 while abutting on the roller 35, and according to the profile of the cam 36, the camshaft 37 is thereby pushed downward. As a result, the lower end side of the link plate 34 is pulled by the camshaft 37, and the link plate 34 moves downward together with the camshaft 37. Then, as the link plate 34 moves downward, the downstream block 32 moves downward while further extending the spring 33, and as illustrated in the perspective view of Fig. 7, the second pedestal 20B approaches, is in contact with, and is clamped to the second inclined surface 60B. In this state, the column 50 as the second member is joined to the column attaching/detaching unit 10 as the first member. By appropriately designing the profile of the cam 36, a speed at which the second pedestal 20B is in contact with the second inclined surface 60B and a degree of clamping force can be adjusted. For example, from a time point when the second pedestal 20B is in contact with the second inclined surface 60B, the clamping force applied to the column 50 via the first pedestal 20A and the second pedestal 20B can be gradually increased to a predetermined value by the rotation of the cam 36. Further, by lowering the second pedestal 20B toward the second inclined surface 60B while pulling the downstream block 32 by the spring 33, it is possible to prevent the second pedestal 20B from rapidly contacting the second inclined surface 60B.

As described above, the upstream block 31, the downstream block 32, the spring 33, the link plate 34, the roller 35, the cam 36, the camshaft 37, and the lever 38 act as the clamping mechanism 30 that causes the placement portion (first end face) 25 of the pair of pedestals 20 to be clamped to the inclined surface (second end face) 60, which is the two end faces, matches the center axes C of the liquid passage flow path (first flow path) 22 and the column flow path (second flow path) 62 with each other, and joins the liquid passage flow path 22 and the column flow path 62.

Fig. 8 is a cross-sectional view taken along the line X-X, illustrating the joining state illustrated in Fig. 7. In this joining state, the center axis C of the enlarged diameter portion 23, which is the downstream end of the first liquid passage flow path 22A to be the liquid passage flow path (first flow path) 22 on the upstream side of the column attaching/detaching unit (first member) 10, is matched with the center axis C of the first column flow path 62A to be the column flow path (second flow path) 62 on the upstream side of the column (second member) 50. Similarly, the center axis C of the enlarged diameter portion 23, which is the upstream end of the second liquid passage flow path 22B to be the liquid passage flow path (first flow path) 22 on the downstream side of the column attaching/detaching unit (first member) 10, is matched with the center axis C of the second column flow path 62B, which is the column flow path (second flow path) 62 on the downstream side of the column (second member) 50. In this state, the liquid flowing from the first liquid passage flow path 22A passes through the main body flow path 51A from the first column flow path 62A, and flows from the second column flow path 62B to the second liquid passage flow path 22B.

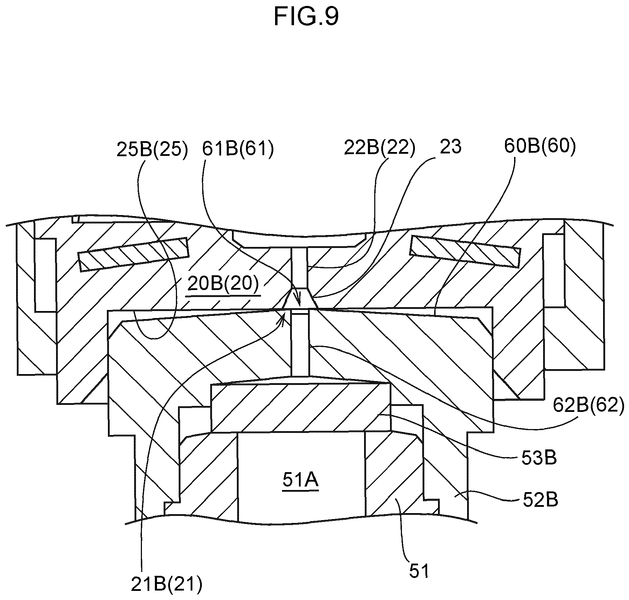

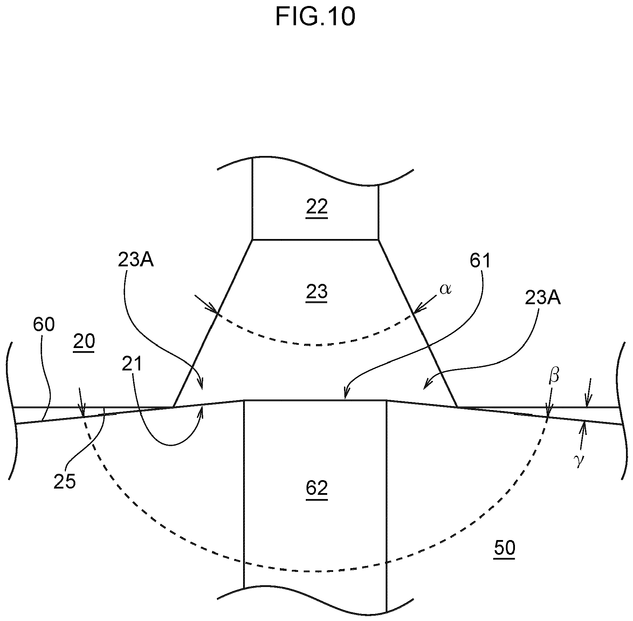

Fig. 9 is an enlarged cross-sectional view illustrating a joining portion between the column attaching/detaching unit 10 and the column 50. A diameter of the second communication hole 21B (communication hole 21), which is the end edge of the enlarged diameter portion 23, is larger than a diameter of the second liquid passage hole 61B. A center portion of the second inclined surface 60B (inclined surface 60), that is, the periphery of the second liquid passage hole 61B can enter the enlarged diameter portion 23. Further, as will be described later, since a taper angle $\alpha$ (first taper angle, see Fig. 10) of the inner surface of the enlarged diameter portion 23 is formed to be smaller than a taper angle $\beta$ (second taper angle, see Fig. 10) of the inclined surface 60, and a diameter of the column 50 is larger than a diameter of the communication hole 21, a contact surface of the second inclined surface 60B with a peripheral edge of the enlarged diameter portion 23 is small.

Fig. 10 is a schematic view illustrating a state in which the placement portion 25 of the pedestal 20 to be the first end face is joined to the inclined surface 60 to be the second end face. In Fig. 10, an inclination angle $\gamma$ formed by the inclined surface 60 and a virtual surface perpendicular to the center axis C of the column 50 is from 1° to 10°. Note that, since the placement portion 25 overlaps with the virtual surface in the drawing, the virtual surface is omitted in the drawing. A taper angle $\alpha$ of the inner surface of the enlarged diameter portion 23 is from 30° to 90°. A taper angle $\beta$ of the inclined surface 60 is from 160° to 178°. That is, the taper angle $\beta$ is larger than the taper angle $\alpha$. Here, the following Formula is established between the inclination angle $\gamma$ of the inclined surface 60 and the taper angle $\beta$ of the inclined surface 60.

$$2\gamma+\beta=180°$$

Since the taper angle of each of the enlarged diameter portion 23 and the inclined surface 60 has such a numerical range, it is possible to bring only the tip of the inclined surface 60, that is, the vicinity of the liquid passage hole 61 into close contact with the communication hole 21 in a state of being shallowly entered. As a result, the liquid flowing from the column flow path 62, which is the second flow path, to the liquid passage flow path 22, which is the first flow path, is less likely to stay in a space 23A formed between the edge of the enlarged diameter portion 23 and the inclined surface 60. Then, when this configuration is applied to the liquid chromatography apparatus 100 (see Fig. 11), a specimen does not stay in the space 23A more than necessary, the flow of the specimen becomes smooth, and an abnormal peak at the time of measuring the specimen can be suppressed. In addition, the diameter of the communication hole 21 corresponding to the maximum diameter portion of the enlarged diameter portion 23 is larger than the diameter of the liquid passage hole 61. For this reason, even when the position where the column 50 is placed on the pedestal 20 is slightly shifted, the tip of the inclined surface 60 enters the enlarged diameter portion 23 and the inclined surface 60 can be reliably joined to the end edge of the enlarged diameter portion 23, so that the slight misalignment can be absorbed, and the circulation of the liquid is not hindered.

The configuration described above is realized when at least one of the cap (i.e., the first cap 52A and the second cap 52B) of the column 50 and the pedestal 20 undergoes elastic deformation. However, since the column 50 is a consumable, the cap of the column 50 is preferably made of a material that is more easily deformed than the pedestal 20. For example, it is desirable that the cap of the column 50 is made of a material having a lower hardness than the pedestal 20, for example such that the cap of the column 50 is made of polyether ether ketone (PEEK) resin and the pedestal 20 is made of stainless steel.

Fig. 11 is a schematic diagram illustrating a schematic configuration of the liquid chromatography apparatus 100. A liquid containing a test substance flows into the column 50 which is the second member attached to the column attaching/detaching unit 10 which is the first member from a liquid supply path 110 on the upstream side. Each component of the liquid that has flown into the column is selectively delayed by an interaction such as adsorption or distribution with the filler in the column 50 and flows out from a liquid sending path 120. Each component that has flowed out flows into a measurement unit 130 while generating a difference in time to reach on the basis of each delay, is provided for predetermined measurement, and is then discharged from a discharge path 140.

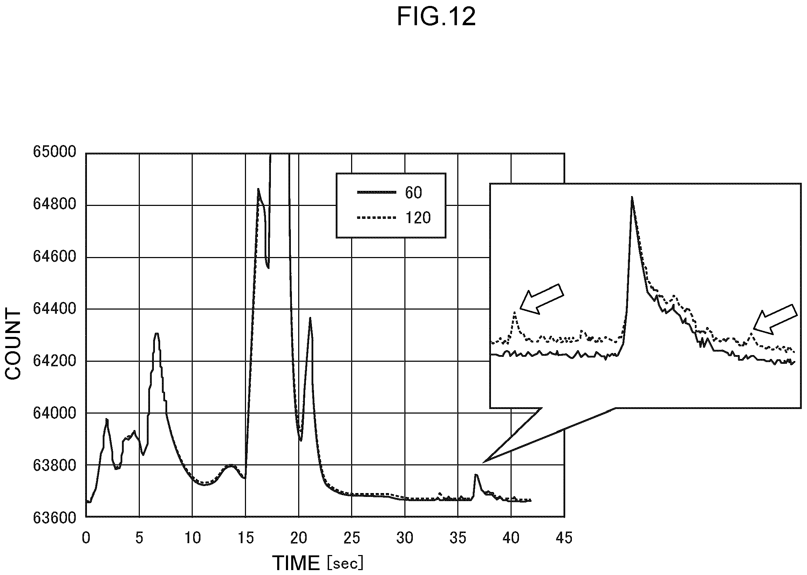

Fig. 12 is a chromatogram illustrating an influence of the taper angle $\alpha$ of the enlarged diameter portion 23 on a measurement result. In this chromatogram, in a state in which the second end face of the column 50 is not an inclined surface but a flat surface, a case where the taper angle $\alpha$ of the enlarged diameter portion 23 is set to 60° is indicated by a solid line, and a case where the taper angle $\alpha$ is set to 120° is indicated by a broken line. This chromatogram is obtained by measuring hemoglobin in blood as a test substance. When the taper angle of the enlarged diameter portion 23 was 120°, an abnormal peak indicated by an arrow was observed. On the other hand, when the taper angle of the enlarged diameter portion 23 was 60°, such an abnormal peak was not observed. It is presumed that this is because when the taper angle of the enlarged diameter portion 23 is 120°, the liquid tends to stay in the space 23A illustrated in Fig. 10, whereas when the taper angle of the enlarged diameter portion 23 is 60°, the liquid hardly stays in the space 23A, and a component eluted from the column 50 is promptly sent to the measurement unit 130. Therefore, the taper angle of the enlarged diameter portion 23 is from 30° to 90°, so that it is possible to suppress the appearance of an abnormal peak that adversely affects the measurement result. It is assumed that the measurement result in Fig. 12 have the similar tendency even when the second end face of the column 50 is the inclined surface 60.

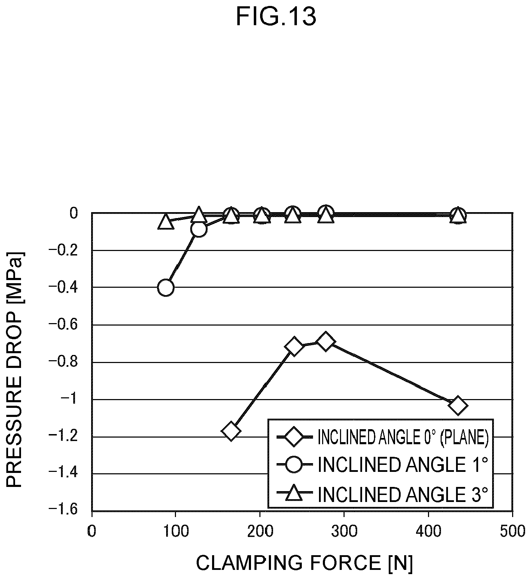

Fig. 13 is a graph illustrating an influence of the angle of the inclined surface of the column on a relation between the clamping force of the column 50 and the pressure drop due to non-close contact. As described above, the clamping force is the clamping force applied to the column 50 from the vertical direction via the two pedestals 20. The term "non-close contact" mentioned herein means that the end face of the column 50 and the placement portion 25 of the pedestal 20 are insufficiently joined. That is, due to the non-close contact, the pressure inside the column 50 may decrease, leading to liquid leakage and unmeasurability. This graph shows data when the columns 50 having the taper angles $\beta$ of the inclined surfaces 60 of 180° (rhombus), 178° (circle), and 174° (triangle) are attached to the column attaching/detaching unit 10. The fact that the taper angles $\beta$ of the inclined surface 60 are 180° (rhombus), 178° (circle), and 174° (triangle) corresponds to a situation where the inclination angles $\gamma$ are 0°, 1°, and 3°, respectively. Specifically, a result of observing the pressure decrease inside the column 50 after 1 minute by applying a pressure of 12 MPa while applying the clamping force (N) indicated by a horizontal axis is shown.

As a result, in a case where the inclined surface 60 was formed as a taper angle of 180° (inclination angle 0°), that is, a flat surface, a decrease in pressure could not be avoided even when a high clamping force of 170 N or more is applied. On the other hand, in both of the case where the taper angle $\beta$ of the inclined surface 60 was 178° (inclination angle 1°) and the case where the taper angle $\beta$ was 174° (inclination angle 3°), a decrease in pressure was not observed even with a low clamping force of about 120 N. In particular, when the taper angle $\beta$ of the inclined surface 60 is 178°, the pressure does not decrease even with a low clamping force of less than 100 N, which indicates that the close contact is sufficient. It is presumed that, since the taper angle is provided to the inclined surface 60, the tip of the inclined surface 60 partially enters the communication hole 21 and the close contact is realized by the clamping force, thereby preventing a decrease in pressure. Note that the measurement result in Fig. 13 is a result of measurement in a state in which the enlarged diameter portion 23 is not formed on the side of the column attaching/detaching unit 10. Even when the enlarged diameter portion 23 is formed and a taper angle is formed on the inclined surface 60, it is presumed that the same tendency is obtained.

As described above, based on the configuration of the inclined surface 60, even when the contact surface is small enough to be substantially equal to the line contact at the time point when the pedestal 20 is in contact with the inclined surface 60, the clamping force applied to the column 50 is gradually increased by the rotation of the cam 36, so that the first cap 52A and the second cap 52B are deformed to some extent. Due to this deformation, the close contact is further advanced from the small contact surface, and ring-shaped surface contact is formed around the communication hole 21. In the placement portion 25, the contact portion between the inclined surface 60 and the placement portion 25 of the pedestal 20 is limited to the periphery of the end edge of the enlarged diameter portion 23, and does not reach the inner surface of the enlarged diameter portion 23, and sufficient close contact can be made without spreading over the entire surface of the placement portion 25. In addition, the inclined surface 60 of the column 50 and the placement portion 25 of the pedestal 20 can be easily joined in a state of being in close contact with each other without interposing a separate member such as a sealing material.

In the end face of the column 50 or the end faces of the first cap 52A and the second cap 52B (the first inclined surface 60A and the second inclined surface 60B), the portion that can be in close contact with the placement portion 25 of the pedestal 20 is limited to an annular surface extending from an annular line in contact with the communication hole 21 away from the peripheral edge of the liquid passage hole 61 to the outer peripheral surface of the column 50. As a result, sufficient close contact can be achieved without spreading over the entire end face of the column 50. Then, since a contact area is smaller than the entire surface of the end face of the column 50, the pressure per unit area of the contact portion at the time of clamping is increased as compared with the case where the pedestal 20 and the end face of the column 50 are in surface contact with each other on the entire surface. As a result, it is possible to secure a tight fit even when the clamping force to the column is reduced, and to easily secure a liquid-tight state. This state is similarly seen between the enlarged diameter portion 23 of the first communication hole 21A and the first inclined surface 60A. Note that the end edge of the enlarged diameter portion 23 may be chamfered.

As described above, the flow path member joining structure of the present embodiment enables the liquid to flow by attaching, to the first member (column attaching/detaching unit 10) having the first flow path (liquid passage flow path 22), the second member (column 50) having the second flow path (column flow path 62), and aligning the first flow path and the second flow path with each other. Specifically, the flow path member joining structure including the column attaching/detaching unit 10 as the first member and the column 50 as the second member is configured such that when the column 50 is attached to the column attaching/detaching unit 10, the column flow path 62 of the column 50 and the liquid passage flow path 22 of the column attaching/detaching unit 10 are aligned with each other and attached, and the liquid is flowable between the column 50 and the column attaching/detaching unit 10. The first flow path is open toward the first end face (placement portion 25 of the pedestal 20) of the first member, and the second flow path is open toward the second end face (inclined surface 60) of the second member. Moreover, the enlarged diameter portion 23 whose inner diameter gradually increases toward the first end face is formed at an end of the first flow path. Further, the second end face is formed as the inclined surface 60 inclined from the opening of the second flow path toward the periphery.

Further, in the member joining structure described above, it is preferable that the inner surface of the enlarged diameter portion is formed in a tapered shape, and the taper angle (in other words, the angle of the inner surface in the cross section) $\alpha$ of the tapered shape is from 30° to 90°. Further, the inclined surface is formed in a tapered shape. The taper angle of the tapered shape is preferably from 160° to 178°. The taper angle $\beta$ (second taper angle) of the inclined surface 60 is preferably different from the taper angle $\alpha$ (first taper angle) of the inner surface of the enlarged diameter portion 23. Furthermore, the taper angle $\beta$ of the inclined surface 60 is preferably larger than the taper angle $\alpha$ of the inner surface of the enlarged diameter portion 23. Since the taper angle $\beta$ of the inclined surface 60 is larger than the taper angle $\alpha$ of the inner surface of the enlarged diameter portion 23, as described above, the clamping force applied to the column 50 by the rotation of the cam 36 gradually increases, the tip of the inclined surface 60 slightly enters the enlarged diameter portion 23, and the inclined surface 60 and the inner surface of the enlarged diameter portion 23 are not in surface contact with each other on the entire surface, and the small surface contact can be secured. Therefore, the pressure per unit area increases even with a small clamping force, whereby the tight fit can be secured.

In the flow path member joining structure, it is preferable that the first member further includes the clamping mechanism 30 that causes the first end face and the second end face to be clamped and aligns the first flow path and the second flow path with each other.

The flow path member joining structure is particularly suitable when the first member is the column attaching/detaching unit 10 in the liquid chromatography apparatus 100, and the second member is the column 50 detachably attached to the column attaching/detaching unit 10. In this case, the column 50 includes second end faces at both ends of the second flow path, and the column attaching/detaching unit 10 includes first end faces on sides corresponding to both ends of the second flow path.

That is, the column attaching/detaching unit 10 is mounted with the column 50 having the two end faces (inclined surfaces 60), the liquid passage holes 61 open at the centers of the two end faces, and the column flow path 62 connecting the two liquid passage holes 61. The column attaching/detaching unit 10 includes the pair of pedestals 20 facing the two end faces of the column 50, the communication holes 21 open toward the placement portions 25 of the pair of pedestals 20, the liquid passage flow paths 22 communicating with the communication holes 21, the enlarged diameter portion 23 formed at the end of the liquid passage flow path 22 and having an inner diameter gradually increasing toward the placement portion 25 of the pedestal 20, and the clamping mechanism 30 for causing the placement portions 25 of the pair of pedestals 20 to be clamped to the two end faces (inclined surfaces 60) and aligning the liquid passage flow path 22 and the column flow path 62 with each other. The inner surface of the enlarged diameter portion 23 is formed in a tapered shape, and the taper angle $\alpha$ of the tapered shape is preferably from 30° to 90°.

Moreover, the column 50 is attached to the column attaching/detaching unit 10 including the pair of pedestals 20 facing each other, the communication holes 21 open toward the placement portions 25 of the pair of pedestals 20, and the liquid passage flow paths 22 communicating with the communication holes 21. The column 50 includes the two end faces facing the placement portions 25 of the pair of pedestals 20 of the column attaching/detaching unit 10, the liquid passage holes 61 open at the centers of the two end faces, and the column flow path 62 connecting the two liquid passage holes 61. The two end faces of the column 50 are formed as the inclined surfaces 60 inclined from the liquid passage hole 61 to the outer peripheral surface of the column toward the periphery. The inclined surface 60 is formed in a tapered shape. The taper angle $\beta$ of the tapered shape is preferably from 160° to 178°, and more preferably from 174° to 178°. With this configuration, the liquid passage hole 61 becomes the uppermost point of the end face of the column, and the distance between the two liquid passage holes 61 becomes the longest length of the column 50.

As illustrated in Fig. 7 and Fig. 8, the downstream block 32 is installed so as to be vertically movable with respect to the support 11. A plate spring 39 is inserted into an internal space of the second pedestal 20B surrounded by the downstream block 32.

Then, as the link plate 34 moves downward, the second pedestal 20B approaches the second inclined surface 60B, and when the second pedestal 20B is further joined to the column 50 from the contact state, the plate spring 39 starts to contract. As the plate spring 39 contracts, a pressing force toward the column 50 is generated from the plate spring 39 to the second pedestal 20B. The pressing force of the plate spring 39 further brings the column 50 into close contact with the column attaching/detaching unit 10. As a result, not only by adjusting the profile of the cam 36 but also by adjusting the pressing force of the plate spring 39, the degree of the force for joining the second pedestal 20B and the second inclined surface 60B can be adjusted. That is, by combining the cam 36 and the plate spring 39, it is easy to adjust the clamping force applied from the second pedestal 20B to the inclined surface of the column 50.

Industrial Applicability

The present invention can be used for a specimen measurement apparatus such as a liquid chromatography apparatus, particularly, a joining structure of a column attaching/detaching unit and a column in the liquid chromatography apparatus.

**Claims**

1. A flow path member joining structure for enabling a liquid to flow by attaching, to a first member (10) having a first flow path (22), a second member (50) having a second flow path (62) and aligning the first flow path (22) and the second flow path (62) with each other, wherein:

   the first flow path (22) is open toward a first end face (25) of the first member (10), and an enlarged diameter portion (23) whose inner diameter gradually increases toward the first end face (25) is formed at an end of the first flow path (22), and
   the second flow path (62) is open toward a second end face (60) of the second member (50).

2. The flow path member joining structure according to claim 1, wherein:

   an inner surface of the enlarged diameter portion (23) is formed in a tapered shape, and
   a taper angle of the tapered shape is from 30° to 90°.

3. The flow path member joining structure according to claim 1 or 2, wherein
   the first member (10) further includes a clamping mechanism (30) that joins the first flow path (22) and the second flow path (62) by causing the first end face (25) and the second end face (60) to approach each other.

4. The flow path member joining structure according to any preceding claim, wherein:

   the first member (10) is a column attaching/detaching unit (10) in a liquid chromatography apparatus (100), and
   the second member (50) is a column (50) detachably attached to the column attaching/detaching unit (10).

5. The flow path member joining structure according to claim 4, wherein:

   the column (50) includes second end faces (60) at both ends of the second flow path (62), and
   the column attaching/detaching unit (10) includes first end faces (25) corresponding to the second end faces (60) at both ends of the second flow path (62).

6. The flow path member joining structure according to claim 5, wherein
   each of the second end faces (60) is formed as an inclined surface (60) inclined from an opening of the second flow path (62) toward a periphery thereof.

7. A column attaching/detaching unit (10) for attaching a column (50) having two end faces (60), liquid passage holes (61) open at centers of the two end faces (60), and a column flow path (62) connecting the two liquid passage holes (61), the column attaching/detaching unit (10) comprising:

   a pair of pedestals (20) facing the two end faces (60), respectively;
   communication holes (21) open to respective placement portions (25) of the pair of pedestals (20);
   liquid passage flow paths (22) communicating with the respective communication holes (21);
   an enlarged diameter portion (23) formed at an end of each of the liquid passage flow paths (22) and having an inner diameter that gradually increases toward a respective placement portion (25); and
   a clamping mechanism (30) causing the pair of pedestals (20) to approach the two end faces (60) to join the liquid passage flow paths (22) and the column flow path (62).

8. The column attaching/detaching unit (10) according to claim 7, wherein:

   an inner surface of the enlarged diameter portion (23) is formed in a tapered shape, and
   a taper angle of the tapered shape is from 30° to 90°.

9. The column attaching/detaching unit (10) according to claim 8, wherein the taper angle of the tapered shape is 60°.

FIG.1

## FIG.2

26

25A(25)

20A(20)

24A(24)

21A(21)

# FIG.3

20B(20)

IV

24B(24)

25B(25)

21B(21)

IV

# FIG.4

C

20B(20)

22B(22)

21B(21)

23

25B(25)

24B(24)

# FIG.5

# FIG.6

# FIG.7

FIG.8

# FIG.9

25B(25)  61B(61)          22B(22)   23      60B(60)

20B(20)

62B(62)

53B

51A

52B

21B(21)                              51

# FIG.10

# FIG.11

# FIG.12

# FIG.13

Europäisches
Patentamt

European
Patent Office

Office européen
des brevets

# EUROPEAN SEARCH REPORT

Application Number

EP 24 15 4438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 937 990 B2 (HITACHI HIGH TECH CORP [JP]) 10 May 2011 (2011-05-10) * column 3, line 44 - column 4, paragraph 5; figure 1 * | 1,2,4,5 | INV. G01N30/60 |
| X | JP H02 238362 A (MEIDENSHA ELECTRIC MFG CO LTD) 20 September 1990 (1990-09-20) * figure 2 * | 1,2,4,5 | |
| X | JP S50 150497 A (HITACHI) 2 December 1975 (1975-12-02) * figure 3 * | 1,3-5, 7-9 | |
| X,D | JP H04 194749 A (HITACHI LTD) 14 July 1992 (1992-07-14) * figures 3,4 * | 1-6 | |

TECHNICAL FIELDS
SEARCHED (IPC)

G01N

The present search report has been drawn up for all claims

| Place of search | Date of completion of the search | Examiner |
|---|---|---|
| Munich | 19 June 2024 | Schneiderbauer, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 4438

19-06-2024

| Patent document cited in search report | | Publication date | Patent family member(s) | | Publication date |
|---|---|---|---|---|---|
| US 7937990 | B2 | 10-05-2011 | JP | 5081473 B2 | 28-11-2012 |
| | | | JP | 2008215857 A | 18-09-2008 |
| | | | US | 2008202218 A1 | 28-08-2008 |
| JP H02238362 | A | 20-09-1990 | NONE | | |
| JP S50150497 | A | 02-12-1975 | JP | S5330038 B2 | 24-08-1978 |
| | | | JP | S50150497 A | 02-12-1975 |
| JP H04194749 | A | 14-07-1992 | JP | 2568312 B2 | 08-01-1997 |
| | | | JP | H04194749 A | 14-07-1992 |

EPO FORM P0459

For more details about this annex : see Official Journal of the European Patent Office, No. 12/82

EP 4 411 368 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4194749 A